# FASCICULE DE BREVET EUROPEEN

(11) **EP 1 238 436 B1**
(45) Date de publication et mention de la délivrance du brevet: **01.06.2005**
(21) Numéro de dépôt: 00985361.5
(22) Date de dépôt: 30.11.2000
(51) Int. Cl.: H01L 41/113

(54) **DISPOSITIF AUTONOME DE COMMANDE A DISTANCE, APPAREIL ET INSTALLATION ELECTRIQUE COMPORTANT UN TEL DISPOSITIF**
AUTONOME FERNBEDIENUNG, SOWIE ELEKTRISCHES GERÄT UND INSTALLATION DIESE BEINHALTEND
SELF-POWERED REMOTE CONTROL DEVICE, ELECTRICAL APPARATUS AND INSTALLATION COMPRISING SAME

(30) Priorité: 16.12.1999 FR 9915893
(43) Date de publication de la demande: 11.09.2002
(73) Titulaire: Schneider Electric Industries SAS, 92500 Rueil-Malmaison (FR)
(72) Inventeur: ALMOSNINO, Patrick, F-38250 Saint Nizier du Moucherotte (FR); ANDRE, Philippe, F-38600 Fontaine (FR); CORTESE, Gilles, F-38460 Saint Marcellin (FR); MOUSSANET, Roland, F-38450 Notre Dame de Commiers (FR); ROUSSET, Patrick, F-38500 Saint Cassien (FR)
(74) Mandataire: Tripodi, Paul
(86) Numéro de dépôt international: PCT/FR2000/003339
(87) Numéro de publication internationale: WO 2001/045139

(56) Documents cités:
- WO-A-97/44883
- DE-A- 19 755 620
- FR-A- 2 198 670
- US-A- 4 612 472
- US-A- 5 844 516

## Description

L'invention concerne un dispositif autonome de commande à distance comportant :
- des moyens de transmission.
- un circuit d'alimentation connecté aux moyens de transmission.
- un générateur fournissant de l'énergie électrique connecté au circuit d'alimentation, et
- des moyens de commande associés au générateur d'énergie électrique.

Les dispositifs de commande à distance connus comportent généralement un émetteur et un récepteur pour commander un appareil électrique. Les émetteurs de type connu ont des circuits électroniques permettant d'émettre un rayonnement électromagnétique haute fréquence, infrarouge ou ultrasonore. Le rayonnement émis par les émetteurs est de préférence modulé et codé pour permettre une sécurité de fonctionnement satisfaisante lorsque plusieurs émetteurs et récepteurs sont utilisés.

Les récepteurs reçoivent le rayonnement émis, puis ils détectent et décodent le signal reçu. Le signal décodé est utilisé par des circuits électroniques pour commander notamment des appareils électriques.

Les émetteurs autonomes fixes ou mobiles nécessitent généralement une alimentation fournie par des piles ou des batteries rechargeables. La gestion du remplacement des piles rend l'utilisation des émetteurs autonomes très contraignante. De plus, une utilisation fréquente des émetteurs conduit à une décharge rapide des piles, et par conséquent à des remplacements fréquents et à un coût élevé d'exploitation. Les émetteurs autonomes risques de présenter aussi des défauts ou des arrêts de fonctionnement si les piles sont déchargées ou non disponibles.

Il existe des dispositifs dont le générateur est un circuit magnétique oscillant. Cependant l'énergie fournie par de tels générateurs est faible et les dispositifs de télécommande sont volumineux. Un dispositif de ce type est décrit dans le brevet US 4,471,353.

D'autres dispositifs comportant un générateur électromagnétique plus performant sont décrits dans la demande de brevet EP-0826166. Cependant, dans ces dispositifs le volume ne peut être suffisamment réduit pour être intégré dans des appareils de faibles dimensions.

L'invention a pour but un dispositif de commande à distance comportant un émetteur autonome pouvant occuper un faible volume.

Dans un dispositif autonome de commande à distance selon l'invention, le générateur comporte au moins un élément piézoélectrique recevant des contraintes mécaniques produites par des actions sur les moyens de commandes et fournissant de l'énergie électrique au circuit d'alimentation.

Dans un mode de réalisation préférentiel, le circuit d'alimentation comporte des moyens de stockage d'énergie électrique pour stocker de l'énergie électrique fournie par l'élément piézoélectrique.

Dans un mode de réalisation particulier, les moyens de commande comportent des moyens de calibrage d'énergie mécanique pour percuter l'élément piézoélectrique selon un choc et une course mécanique prédéterminés.

Avantageusement, les moyens de calibrage d'énergie mécanique comportent aux moins une lame de ressort ayant deux états stables pour commander un déplacement calibré d'un percuteur lorsqu'une position de basculement est dépassée.

De préférence, l'élément piézoélectrique comporte un support métallique souple et une pastille en matériau piézoélectrique disposée sur une face dudit support.

Avantageusement, les moyens de commande percutent l'élément piézoélectrique du coté opposé à la pastille.

Selon une première variante, le support métallique souple est maintenu librement dans un logement destiné à le recevoir.

Selon une seconde variante, le support métallique souple est maintenu à laide d'un joint disposé sur un rebord dirigé vers la face dudit support comportant la pastille.

De préférence, le matériau piézoélectrique de la pastille est composé essentiellement de céramique ou de copolymère.

Avantageusement, l'élément piézoélectrique à une résonance mécanique pour augmenter la duré de fourniture de l'énergie électrique au circuit d'alimentation.

Pour un rendement élevé, les moyens de stockage d'énergie électrique comportent au moins un condensateur électrique, la capacité des moyens de stockage étant entre 0.4 et 50 microfarads.

Particulièrement, la capacité des moyens de stockage a une valeur entre 2 et 10 microfarads.

Dans un mode de réalisation préférentiel, le dispositif comporte des moyens de gestion de l'énergie électrique connectés au circuit d'alimentation pour contrôler une phase d'initialisation et de codage et une phase de transmission.

Dans un mode particulier de réalisation, les moyens de transmission comportent des moyens d'émission et des moyens de réception.

Avantageusement, les moyens de transmission comportent des moyens d'émission alimentés par un port de sortie d'un circuit intégré.

De préférence, le dispositif comporte des moyens de mémorisation connectés aux moyens de transmission.

De préférence, le dispositif comporte des moyens de comptage connectés aux moyens de transmission.

De préférence, les moyens de transmission comportent des moyens de contrôle de conditions d'émission.

Un appareil selon un mode réalisation de l'invention, comporte un organe d'action mécanique, et un dispositif autonome de commande à distance tel que défini ci-dessus, ledit organe étant susceptible d'actionner les moyens de commande associés au générateur d'énergie.

Dans un mode particulier de réalisation, l'appareil est un appareil de coupure électrique comportant des moyens d'action mécanique pour actionner les moyens de commande en fonction de l'état dudit appareil de coupure.

Dans un appareil selon un mode de réalisation particulier, les moyens de transmission émettent des signaux utilisables pour effectuer une sélectivité logique.

Dans un appareil selon un mode réalisation préférentiel, les moyens de transmission émettent des signaux utilisables pour effectuer une signalisation différenciée.

Avantageusement, les moyens de transmission émettent des signaux représentatifs d'un nombre de manoeuvres dudit appareil.

Dans un mode particulier de réalisation, l'appareil est un appareil de commande électrique comportant des moyens d'action mécanique pouvant être actionnés par un opérateur.

Dans un mode particulier de réalisation, l'appareil est un appareil de commande électrique comportant des moyens d'action mécanique pouvant être actionnés par un mouvement d'un dispositif mécanique.

Une installation électrique selon un mode réalisation de l'invention, comporte des moyens de réception haute fréquence, et au moins un dispositif autonome de commande à distance tel que défini ci-dessus, ledit récepteur étant susceptible de recevoir des signaux émis par ledit au moins un dispositif autonome.

Avantageusement, l'installation électrique comporte au moins une armoire électrique comportant au moins un dispositif autonome de commande à distance tel que défini ci dessus, et un circuit d'automatisme relié aux moyens de réception.

De préférence, installation électrique comporte au moins un appareil tel que défini ci-dessus.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif autonome de commande à distance selon un mode de réalisation de l'invention :
- la figures 2 représente un dispositif de réception pouvant fonctionner avec un dispositif selon un mode réalisation de l'invention :
- la figure 3 représente une pastille piézoélectrique d'un dispositif selon un mode réalisation de l'invention :
- la figure 4 représente un schéma d'un dispositif de calibrage d'un choc sur un élément piézoélectrique pour un dispositif selon un mode réalisation de l'invention :
- les figures 5 et 6 montrent le maintien et la flexion d'un élément piézoélectrique lors d'un choc de commande :
- les figures 7 et 8 montrent des distances de choc et de contrainte d'éléments piézoélectriques pour des dispositifs autonomes de commande à distance selon des modes réalisation de l'invention:
- les figures 9A et 9B représentent des vues en coupe d'un bouton poussoir comportant un dispositif selon un mode réalisation de l'invention :
- les figures 10A à 10C illustrent des courbes représentatives de signaux pour la gestion d'énergie électrique :
- la figure 11 représente un schéma d'une tête haute fréquence utilisée d'ans un dispositif selon un mode réalisation de l'invention :
- la figure 12 représente un schéma d'un dispositif autonome de commande à distance selon un autre mode réalisation de l'invention
- la figure 13 représente un disjoncteur selon un mode réalisation de l'invention comportant un dispositif autonome de commande à distance:
- la figure 14 représente un schéma d'une installation selon un mode réalisation de l'invention comportant des dispositifs autonomes de commande à distance.

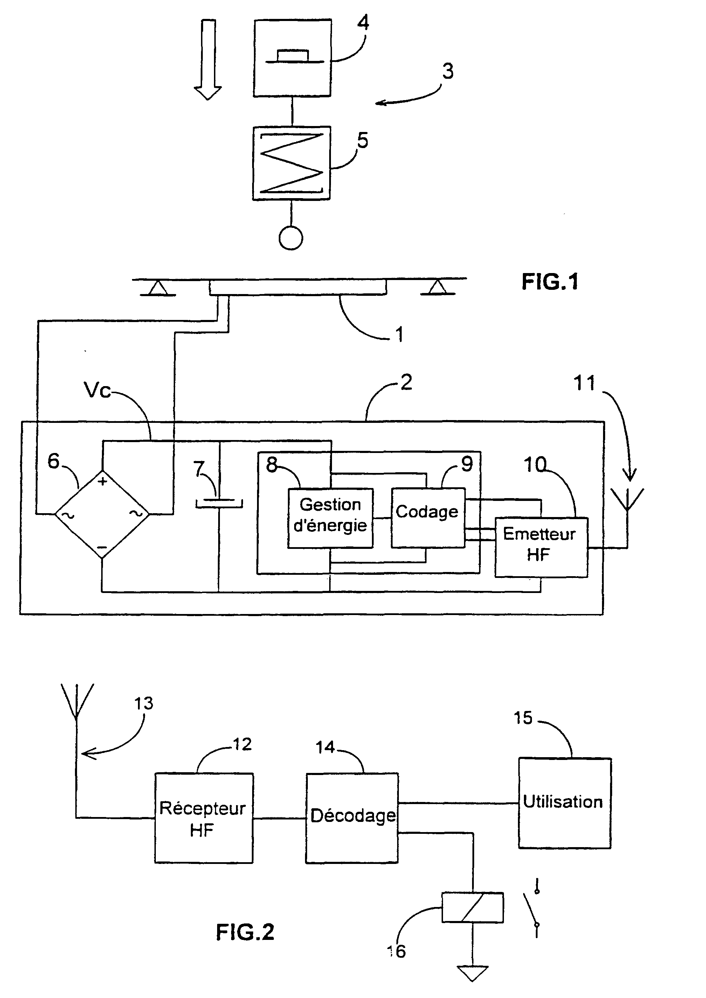

Un dispositif de commande à distance selon un mode de réalisation de l'invention est représenté sur la figure 1. Le dispositif comprend un élément piézoélectrique 1 pour fournir une alimentation électrique à un circuit électronique 2 de traitement et de transmission.

L'élément piézoélectrique 1 fournit de l'énergie électrique lorsque un choc ou une contrainte mécanique est appliquée sur ledit élément piézoélectrique.

Sur la figure 1, des moyens de commande 3 permettent d'appliquer un choc calibré sur l'élément piézoélectrique. Les moyens de commande comportent, par exemple, une touche 4 qui actionne un dispositif 5 de calibrage de l'énergie mécanique de manière à percuter l'élément piézoélectrique selon un choc et une course prédéterminés.

L'énergie électrique produite par l'élément piézoélectrique est appliquée au circuit électronique 2 qui comporte, dans ce mode de réalisation, un pont redresseur 6 connecté à l'élément 1 et fournissant un courant redressé, un condensateur 7 connecté en sortie du pont pour stocker l'énergie électrique en accumulant le courant redressé et pour fournir une tension continue Vc à un circuit 8 de gestion de l'énergie électrique. Le circuit 8 de gestion commande un circuit 9 de codage pour initialiser et transmettre des informations. Un émetteur 10 haute fréquence connecté au circuit de codage émet par l'intermédiaire d'une antenne 11 des signaux haute fréquence codés. Le codage des signaux sert notamment à identifier le dispositif émetteur. L'émetteur 10 peut aussi comporter des moyens de réception pour recevoir, par exemple pendant l'alimentation, des informations de paramétrage.

La figure 2 représente un dispositif de réception pouvant fonctionner avec un dispositif selon la figure 1. Le dispositif de réception comporte un récepteur 12 haute fréquence recevant des signaux captés par une antenne 13 et fournissant des signaux à un circuit 14 de décodage. Le circuit 14 fournit des signaux décodés à un dispositif d'utilisation 15 ou. par exemple, à des actionneurs 16 tels que des relais. Le dispositif d'utilisation peut être, par exemple, une centrale de traitement d'informations. un automate, un processus industriel ou un réseau de communication.

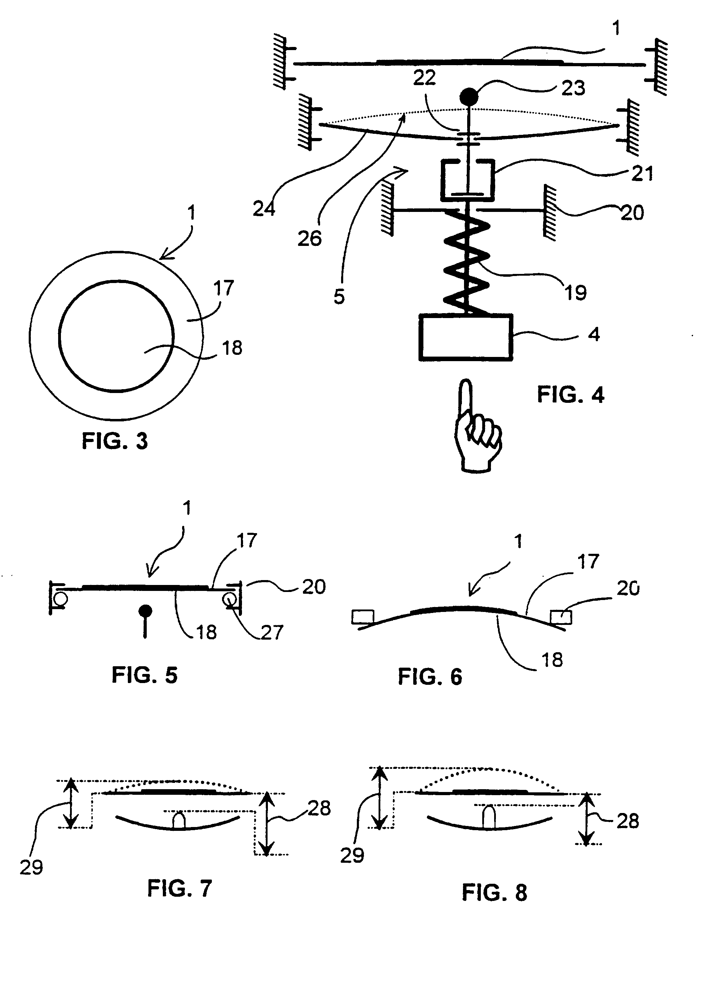

Un exemple de structure d'un élément piézoélectrique est représenté sur la figure 3. Dans cet exemple, l'élément piézoélectrique comporte un support 17 métallique souple sur lequel un pastille en matériaux piézoélectrique est fixée. De préférence, la pastille 18 est en céramique ou en capolymère présentant des rendements élevés.

Un dispositif de calibrage d'un choc sur un élément piézoélectrique est représenté sur la figure 4. Une touche 4 de type poussoir est maintenue sans une position de repos par un ressort de rappel 19 qui appuie sur un corps 20 du dispositif. Une fourche 21 solidaire de la touche permet de commander le déplacement d'un dispositif percuteur 22 comportant une extrémité d'impact 23 pour percuter la pastille de l'élément piézoélectrique. Dans ce mode de réalisation, le dispositif de calibrage du choc comprend une lame de ressort 24 bistable maintenue dans le corps 20 et associée au dispositif 22.

Au repos, la lame de ressort 24 et dans une première position 25 éloignée de la pastille. Lorsque la touche 4 est actionnée, la fourche 21 appuie sur le dispositif percuteur 22 qui déplace avec lui la lame de ressort 24. Dés que le déplacement de la lame dépasse une position médiane de basculement, la lame va brusquement vers une seconde position stable 26. En se déplaçant vers la seconde position, la lame entraîne le dispositif percuteur 22 vers l'élément 1 et l'extrémité d'impact 23 percute l'élément piézoélectrique. Ainsi, les caractéristiques concernant le choc mécanique sur l'élément piézoélectrique et la course mécanique du dispositif percuteur sont dépendantes de la lame de ressort et la distance par rapport à l'élément piézoélectrique. La touche peut être manouvrée aussi bien de manière rapide ou lente. La lame de ressort accumule de l'énergie lorsque elle est déplacée entre la première position stable 25 et une position de basculement. Puis, l'énergie accumulée par la déformation de la lame est libérée lorsque la lame se dirige vers la seconde position stable 26. Lors du choc avec l'élément piézoélectrique, l'énergie mécanique est convertie en énergie électrique par la pastille 18.

Lorsque la touche 4 n'est plus appuyée, le ressort de rappel 19 déplace la touche 4 et la fourche 21 vers une position de repos. En se déplaçant, la fourche ramène le dispositif 22 percuteur et la lame de ressort solidaire dudit dispositif 22 vers la première position stable 25.

Avantageusement, le choc mécanique contre l'élément piézoélectrique est réalisé du côté opposé à la pastille. Ainsi, le rendement, énergie électrique sur énergie mécanique, est plus élevé ainsi que la fiabilité.

Sur la figure 5, un élément piézoélectrique est disposé dans un support 20 pour être maintenu. Dans ce mode de réalisation, un joint 27 d'étanchéité est disposé entre le support 17 de l'élément piézoélectrique et le support 20 pour séparer des parties avant et arrières dudit élément. Avantageusement, le joint 27 est disposé du côté de l'élément 1 qui reçoit le choc mécanique de manière à assurer un rendement élevé. Sur la figure 5, la pastille 18 est aussi du côté qui reçoit le choc pour récupérer une énergie électrique élevée. Un rendement est élevé lorsque l'élément 1 piézoélectrique est déformé contre un support 20 rigide. Une telle disposition est représentée sur la figure 6 ou le support 17 repose sur un support 20 rigide du côté opposé à celui de la pastille 18 qui reçoit le choc mécanique.

Avantageusement, les caractéristiques du choc mécanique peuvent être ajustées en fonction des caractéristiques de l'élément piézoélectrique utilisé et de la quantité d'énergie électrique à recueillir. Les figures 7 et 8 montrent des distances d'une course d'un dispositif percuteur. Sur la figure 7, une distance 28 de course est élevée mais la déformation 29 de l'élément 1 est faible puisque l'impact se fait en bout de course. Sur la figure 8, une distance 28 de course est faible mais la déformation 29 est élevée puisque l'impact se fait avant la fin de la course. Un réglage de distance approprié au type d'élément piézoélectrique permet aussi de garantir une fiabilité étevée et un nombre de manoeuvre important.

Selon le mode de fixation de l'élément piézoélectrique sur un support, une résonance mécanique permet d'augmenter la durée de fourniture d'énergie électrique au circuit électronique 2.

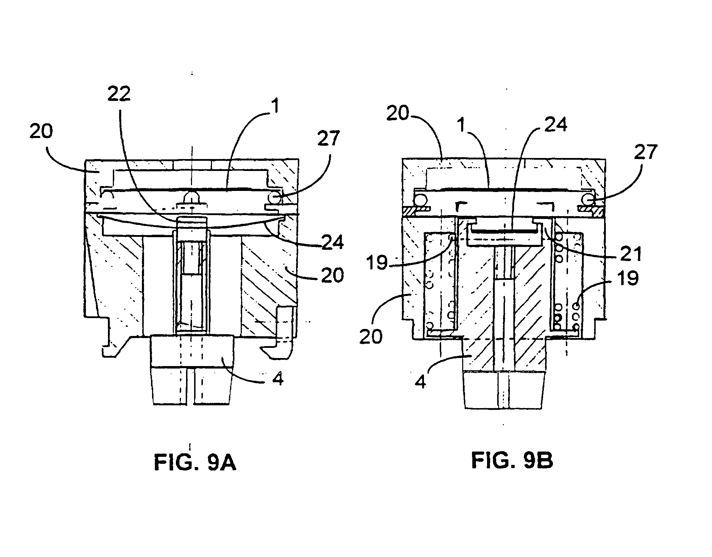

Les figures 9A et 9B montrent des vues en coupe d'un appareil de commande électrique selon un mode de réalisation de l'invention tel qu'un bouton poussoir comportant un dispositif autonome de commande à distance. Dans le mode de réalisation, l'élément 1 est maintenu à l'aide d'un joint torique 27, et la touche 4 du bouton poussoir est repoussé dans sa position de repos par deux ressorts de rappel 19.

Les moyens de stockage de l'énergie électrique tels que le condensateur 7 sont adaptés aux caractéristiques de l'élément piézoélectrique, de la charge du circuit électronique, et de la durée de la transmission. Dans un mode de réalisation de l'invention, le condensateur a une valeur comprise entre 0,4 et 50 microfarads (µF). De préférence, la capacité des moyens de stockage a une valeur 2 et 10 microfarads (µF).

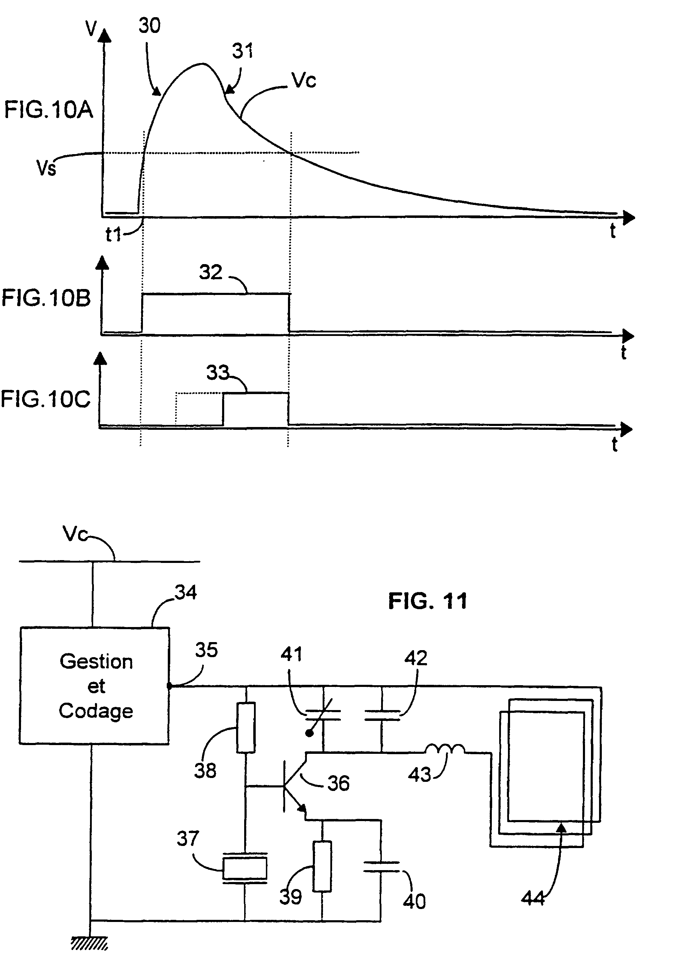

La tension du condensateur est appliquée à un circuit 8 de gestion d'énergie pour contrôler une phase d'initialisation et de codage et une phase de transmission. Les figures 10A à 10C montrent le fonctionnement d'un circuit 8 de gestion d'énergie selon un mode de réalisation de l'invention.

Sur la figure 10A. la courbe représente une tension Vc sur le condensateur 7 de l'alimentation du circuit de gestion 8 lorsque l'élément piézoélectrique reçoit un choc mécanique de commande. La tension Vc a une croissance 30 suivie d'une décroissance 31. Lorsque la tension Vc croît et dépasse un seuil Vs à un instant t1, le circuit de gestion commande un circuit de codage 9. L'état de fonctionnement du circuit de codage est représenté par une courbe 32 sur la figure 10B. Après la commande du circuit de codage, le circuit de gestion commande le fonctionnement de l'émetteur haute fréquence. Une courbe 33 sur la figure 10C montre la durée de fonctionnement de l'émetteur 10 haute fréquence. L'émetteur 10 peut être commander, par exemple, dans un délai prédéterminé, après la commande du circuit de codage, dès que la croissance de la tension Vc n'est plus importante, ou dès que la tension Vc devient décroissante.

Dans un mode préférentiel de réalisation représenté sur la figure 11, les circuits 8 et 9 peuvent être intégrés dans un même circuit 34 réalisé sous forme numérique et/ou analogique.

La commande de l'émetteur haute fréquence est avantageusement réalisée par une sortie 35 du circuit 34 qui alimente un oscillateur. Ainsi, l'énergie électrique est économisée pour garantir une durée de transmission suffisante et fiable.

Sur la figure 11, l'oscillateur est réalisé avec un transistor 36 et un circuit oscillant 37 composé d'un quartz ou d'un résonateur céramique. La polarisation de la base est réalisée par une résistance 38 et la polarisation de l'émetteur est réalisée par une résistance 39 découplée par un condensateur 40. Sur le collecteur du transistor 36 un circuit d'accord comprenant deux condensateurs 41 et 42, une inductance 43 et une antenne 44 en boucle permettent d'émettre un rayonnement haute fréquence. Le condensateur 41 est de préférence du type ajustable de manière à régler l'accord du circuit.

L'antenne 11 ou 44 est adaptée à la distance entre l'émetteur et le récepteur. De préférence, pour des courtes distances de quelques mètres, la fréquence d'émission est inférieure à 400 MHz et la transmission se fait en champs proche. Avantageusement, le champ magnétique sera utilisé avec une antenne boucle accordée.

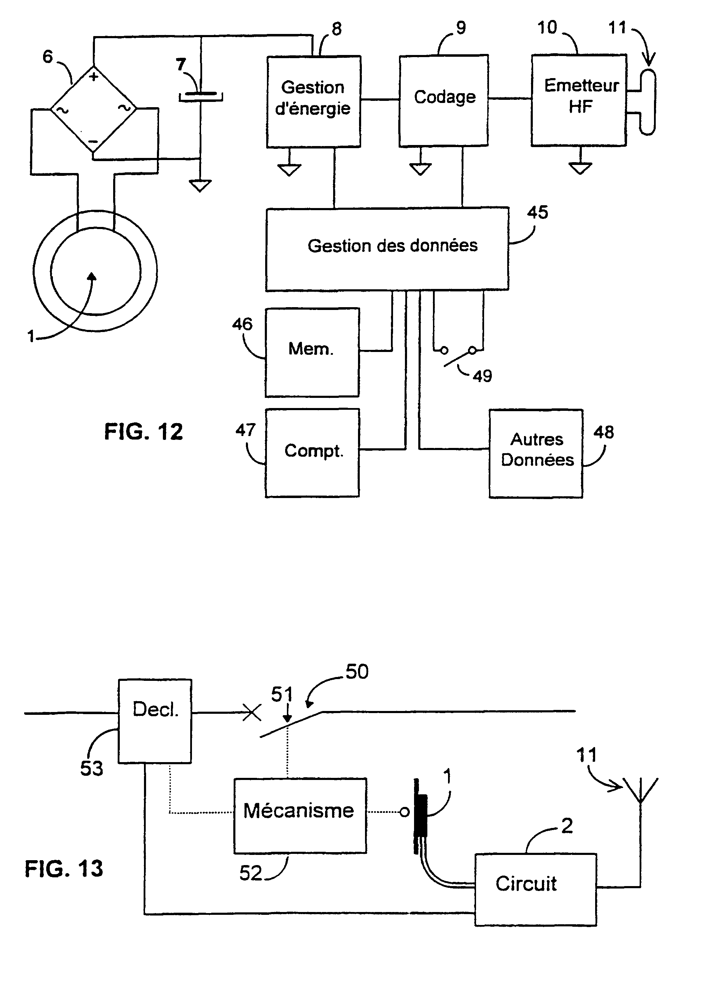

La figure 12 montre un mode de réalisation détaillé d'un dispositif selon l'invention comportant un circuit 45 de gestion de données. Dans le schéma de la figure 12, un circuit de mémorisation 46, un circuit de comptage 47, un circuit de paramétrage 48 comportant d'autres données et/ou au moins un contact électrique 49 peuvent être connectés au circuit de gestion de données.

Selon l'application dans laquelle le dispositif est intégré, le circuit de mémorisation peut par exemple mémoriser, des conditions d'envoi de message, des données à envoyer ou l'identification de l'application.

Le circuit de comptage 47 est utilisé notamment pour compter le nombre de commande effectuées sur l'élément piézoélectrique. Lorsque le dispositif est intégré dans un appareil électrique tel que des disjoncteurs, des interrupteurs, ou des contacteurs, des actions de mécanisme de cet appareil sur l'élément piézoélectrique permettent de compter des ouvertures ou des fermetures des contacts électriques dudit appareil.

Par exemple, dans un disjoncteur comportant un dispositif selon un mode de réalisation de l'invention, le compteur incrémente sa valeur à émettre à chaque manoeuvre du disjoncteur. En association avec des conditions d'envoi mémorisées dans le circuit de mémorisation, un dispositif de commande peut envoyer des données de comptage dès qu'un nombre prédéterminé d'événements comptés est atteint ou dépassé. De plus, les valeurs comptées peuvent être mémorisées dans le circuit de mémorisation. Le circuit de comptage peut être aussi associé à des dispositifs de comptage divers tels que des compteurs de déplacements. des automatismes, des machines tournantes, des machines qui se déplacent en va et vient, des compteurs de fluide ou d'énergie électrique avec télé relevage. Les compteurs de fluide tel que le gaz, l'eau chaude ou l'eau froide avec télé relevage ne nécessitent pas, dans ce cas, d'énergie électrique extérieure. Dans ce cas le dispositif autonome de commande à distance envoie les données de comptage et une trame d'identification du dispositif et/ou de l'utilisateur. Un récepteur récupère les données et les traite ou les envoie à un concentrateur ou une centrale.

Un circuit de paramétrage 48 permet de fournir d'autres données qui peuvent être en attente d'une commande pour être transmises. Par exemple, dans un disjoncteur le circuit 48 peut recevoir des informations du type de défaut qui est entrain de se produire. Ensuite, des que le déclenchement se produit ou une manoeuvre intervient, de l'énergie mécanique est donnée au dispositif de commande à distance qui envoie les informations présente dans le circuit 48. Les informations peuvent concerner les fonctions de visualisation différenciée de défauts, des fonctions de sélectivité logique ou par exemple des repports d'états du disjoncteur par exemple les états ouverts, fermés, déclenchés ou chargés.

Le contact électrique 49 peut également servir à donner une information à transmettre lorsque le dispositif de commande à distance est actionné, par exemple, il peut être associé à la commande de l'élément piézoélectrique 1 pour indiquer la commande effectuée. Par exemple, le contact 49 peut indiquer que la touche 4 est associée à une fonction de contact à ouverture ou à fermeture. De même, si la touche 4 est remplacée par un bouton rotatif de type interrupteur à au moins deux positions, l'interrupteur 49 peut être représentatif du changement de direction ou du changement d'état du bouton, par exemple position ouverte ou fermée. La touche 4 peut aussi être remplacée par un organe de type levier qui actionne l'élément piézoélectrique à chaque changement d'état ou de position. Le dispositif de commande à distance peut aussi être intégré à un dispositif de détection de fin de course dans des installations automatisées, l'énergie mécanique étant apportée par le déplacement d'un élément mécanique.

D'autres appareils électriques selon des modes de réalisation de l'invention tels que des disjoncteurs, des interrupteurs ou des contacteurs disposent de mécanismes qui peuvent actionner un dispositif autonome de commande à distance. Le schéma d'un disjoncteur 50 selon un mode de réalisation de l'invention comportant un dispositif de commande à distance est représenté sur la figure 13. Le disjoncteur 50 comporte au moins un contact de puissance 51 actionné à travers un mécanisme 52. Un déclencheur 53 commande le mécanisme 52 en fonction notamment de caractéristiques prédéterminées de courant et de durée. Par exemple, si un seuil de courant est dépassé pendant un temps prédéterminé, le déclencheur 53 commande le mécanisme 52 pour déclencher l'ouverture du disjoncteur. Le mécanisme 52 utilise de l'énergie mécanique qui peut aussi être fournie sous forme de choc ou de déformation à l'élément piézoélectrique 1 d'un dispositif autonome de commande à distance. Sur le schéma de la figure 13, le mécanisme 51 percute l'élément 1, cependant cet élément peut aussi être actionné par les contacts de puissance 51 ou par un relais du déclencheur 53. Un dispositif 5 de calibrage peut aussi être utilisé pour optimiser le rendement électrique du dispositif de commande à distance. Dans le disjoncteur, le dispositif de commande peut être relié au déclencheur 53 pour émettre des informations utilisables pour des fonctions de sélectivité logique, pour des fonctions de signalisation différenciée et/ou pour des fonctions de repport d'états du disjoncteur, par exemple, fermé, ouvert, ou déclenché. La fonction de sélectivité logique peut nécessiter une fonction de réception de signaux pour indiquer au déclencheur l'ouverture d'un disjoncteur aval. Dans ce cas, la fonction de réception peut être intégrée au circuit 2 et la liaison avec le déclencheur peut être bidirectionnelle. Il est également possible que le circuit 2 électronique reçoive aussi de l'énergie électrique depuis le déclencheur pour des transmissions en continue, la fourniture d'énergie mécanique étant réservée essentiellement pour les actions mécaniques d'ouverture ou de fermeture et lorsque le disjoncteur n'est pas alimenté.

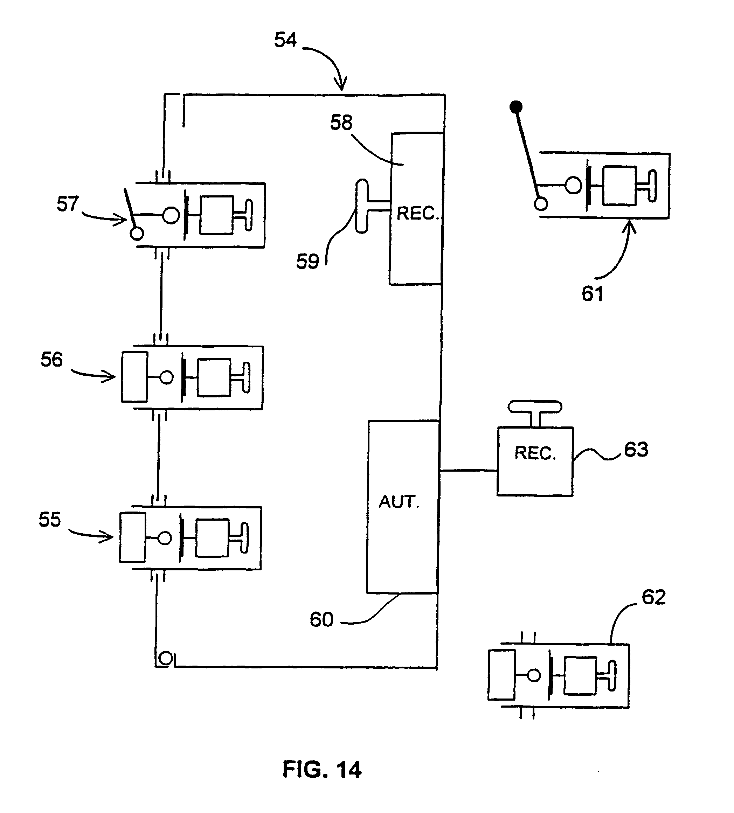

La figure 14 montre une installation selon un mode de réalisation de l'invention comportant des dispositifs autonomes de commande à distance. Dans cette installation, une armoire électrique 54 comporte des dispositifs 55 et 56 ayant une touche de commande de type poussoir, comme celui de la figure 1 par exemple, un dispositif 57 ayant une commande de type interrupteur, un dispositif de réception 58 comme celui de la figure 2 avec une antenne de réception 59. Le dispositif 58 peut être connecté au circuit d'automatisme 60 tels que des circuits en logique câblée, programmée et/ou un automate programmable.

A l'extérieur de l'armoire 54 des dispositifs autonomes de commande à distance peuvent être utilisés pour d'autres fonctions. Par exempte un dispositif 61 peut être un détecteur de fin de course mécanique ou un détecteur de déplacement, et un dispositif 62 peut être un bouton poussoir d'arrêt, d'arrêt d'urgence, ou de mise en marche. Les dispositifs 61 et 62 peuvent communiquer avec un récepteur 63 connecté au circuit d'automatisme 6.

D'autres fonctions ou appareils peuvent comporter des dispositifs autonomes de commande à distance pour effectuer notamment la télécommande d'appareils.

Des dispositifs autonomes selon des mode réalisation de l'invention peuvent être bidirectionnels et comporter un récepteur qui reçoit des informations lorsque de l'énergie mécanique est appliquée à l'élément piézoélectrique. De tels dispositifs peuvent avoir un cycle de synchronisation avec un émetteur distant. Par exemple, lors d'une commande, le dispositif envoie une information pour indiquer qu'il est prêt à recevoir, puis, l'émetteur distant émet en retour des informations au dispositif autonome de commande à distance.

## Revendications

1. Dispositif autonome de commande à distance comportant :
- des moyens (8, 9, 10) de transmission.
- un circuit (6, 7) d'alimentation connecté aux moyens de transmission.
- un générateur comportant au moins un élément (1, 17, 18) piézoélectrique recevant des contraintes mécaniques produites par des actions sur les moyens de commandes et fournissant de l'énergie électrique au circuit d'alimentation, et
- des moyens (3) de commande associés au générateur d'énergie électrique, dispositif **caractérisé en ce que** les moyens de commande comportent des moyens (5) de calibrage d'énergie mécanique pour percuter l'élément piézoélectrique (1, 17, 18) selon un choc prédéterminé.

2. Dispositif selon la revendication 1 **caractérisé en ce que** le circuit d'alimentation comporte des moyens (7) de stockage d'énergie électrique pour stocker de l'énergie électrique fournie par l'élément piézoélectrique (1, 17, 18).

3. Dispositif selon l'une des revendications 1 ou 2 **caractérisé en ce que** les moyens (5) de calibrage d'énergie mécanique percutent l'élément piézoélectrique (1, 17, 18) selon une course mécanique prédéterminée.

4. Dispositif selon la revendication 3 **caractérisé en ce que** les moyens (5) de calibrage d'énergie mécanique comportent aux moins une lame de ressort (24) ayant deux états stables (25, 26) pour commander un déplacement calibré d'un percuteur (22, 23) lorsqu'une position de basculement est dépassée.

5. Dispositif selon l'une quelconque des revendications 1 à 4 **caractérisé en ce que** l'élément piézoélectrique (1) comporte un support métallique (17) souple et une pastille ( 18) en matériau piézoélectrique disposée sur une face dudit support.

6. Dispositif selon la revendication 5 **caractérisé en ce que** les moyens de commande (5, 22, 23) percutent l'élément piézoélectrique du coté opposé à la pastille (18).

7. Dispositif selon l'une des revendications 5 ou 6 **caractérisé en ce que** le support (17) métallique souple est maintenu librement dans un logement (20) destiné à le recevoir.

8. Dispositif selon l'une des revendications 5 ou 6 **caractérisé en ce que** le support métallique souple est maintenu à laide d'un joint (27) disposé sur un rebord dirigé vers la face dudit support comportant la pastille (18).

9. Dispositif selon l'une quelconque des revendications 5 à 8 **caractérisé en ce que** le matériau piézoélectrique de la pastille (18) est composé essentiellement de céramique ou de copolymère.

10. Dispositif selon l'une quelconque des revendications 1 à 9 **caractérisé en ce que** l'élément piézoélectrique à une résonance mécanique pour augmenter la duré de fourniture de l'énergie électrique au circuit (6, 7) d'alimentation.

11. Dispositif selon l'une quelconque des revendications 2 à 9 **caractérisé en ce que** les moyens (7) de stockage d'énergie électrique comportent au moins un condensateur électrique, la capacité des moyens de stockage étant entre 0,4 et 50 microfarads.

12. Dispositif selon la revendication 11 **caractérisé en ce que** la capacité des moyens (7) de stockage a une valeur entre 2 et 10 microfarads.

13. Dispositif selon l'une quelconque des revendications 1 à 12 **caractérisé en ce qu'**il comporte des moyens (8) de gestion de l'énergie électrique connectés au circuit d'alimentation (6, 7) pour contrôler une phase (32) d'initialisation et de codage et une phase (33) de transmission.

14. Dispositif selon l'une quelconque des revendications 1 à 13 **caractérisé en ce que** les moyens de transmission comportent des moyens d'émission (10) et des moyens de réception.

15. Dispositif selon l'une quelconque des revendications 1 à 14 **caractérisé en ce que** les moyens de transmission comportent des moyens (10, 36-44) d'émission alimentés par un port de sortie (35) d'un circuit intègré (34).

16. Dispositif selon l'une quelconque des revendications 1 à 14 **caractérisé en ce qu'**il comporte des moyens (46) de mémorisation connectés aux moyens de transmission (8, 9, 10).

17. Dispositif selon l'une quelconque des revendications 1 à 14 **caractérisé en ce qu'**il comporte des moyens (47) de comptage connectés aux moyens de transmission (8, 9, 10).

18. Dispositif selon l'une quelconque des revendications 1 à 14 **caractérisé en ce que** les moyens de transmission comportent des moyens (45) de contrôle de conditions d'émission.

19. Appareil comportant un organe (4, 52) d'action mécanique **caractérisé en ce qu'**il comporte un dispositif autonome de commande à distance selon l'une quelconque des revendications 1 à 18, ledit organe étant susceptible d'actionner les moyens de commande (3) associés au générateur d'énergie (1).

20. Appareil selon la revendication 19 **caractérisé en ce que** l'appareil est un appareil (50) de coupure électrique comportant des moyens (52) d'action mécanique pour actionner les moyens de commande (3) en fonction de l'état dudit appareil de coupure.

21. Appareil selon des revendications 19 ou 20 **caractérisé en ce que** les moyens de transmission (8, 9, 10) émettent des signaux utilisables pour effectuer une sélectivité logique.

22. Appareil selon l'une quelconque des revendications 19 à 21 **caractérisé en ce que** les moyens de transmission (8, 9, 10) émettent des signaux utilisables pour effectuer une signalisation différenciée.

23. Appareil selon l'une quelconque des revendications 19 à 22 **caractérisé en ce que** les moyens de transmission (8, 9, 10) émettent des signaux représentatifs d'un nombre de manoeuvres dudit appareil.

24. Appareil selon la revendication 19 **caractérisé en ce que** l'appareil est un appareil (55, 56, 57, 62) de commande électrique comportant des moyens d'action mécanique pouvant être actionnés par un opérateur.

25. Appareil selon la revendication 19 **caractérisé en ce que** l'appareil est un appareil (61) de commande électrique comportant des moyens d'action mécanique pouvant être actionnés par un mouvement d'un dispositif mécanique.

26. Installation électrique comportant des moyens (12-15, 58-59, 63) de réception haute fréquence **caractérisée en ce qu'**elle comporte au moins un dispositif autonome de commande à distance selon l'une quelconque des revendications 1 à 18, ledit récepteur étant susceptible de recevoir des signaux émis par ledit au moins un dispositif autonome.

27. Installation électrique selon la revendication 26 **caractérisée en ce qu'**elle comporte au moins une armoire électrique (54) comportant au moins un dispositif autonome de commande à distance selon l'une quelconque des revendications 1 à 18 et un circuit d'automatisme (60) relié aux moyens (58) de réception.

28. Installation électrique selon l'une des revendications 26 ou 27 **caractérisée en ce qu'**elle comporte au moins un appareil (50, 55, 56, 57, 61, 62) selon l'une quelconque des revendications 19 à 24.

## Patentansprüche

1. Fernbetätigungseinrichtung mit Eigenstromversorgung, die
- Übertragungsmittel (8, 9, 10),
- eine mit den Übertragungsmitteln verbundene Stromversorgungsschaltung (6, 7),
- einen Energierzeuger mit mindestens einem Piezoelement (1, 17, 18), das mit mechanischen, durch Betätigung der Steuermittel erzeugten Kräften beaufschlagt wird und elektrische Energie an die Stromversorgungsschaltung liefert, sowie
- dem elektrischen Energieerzeuger zugeordnete Steuermittel (3) umfaßt, **dadurch gekennzeichnet, daß** die Steuermittel Kalibriermittel (5) zur Einstellung mechanischer Energie umfassen, die dazu dienen, das Piezoelement (1, 17, 18) mit einer definierten Stoßkraft zu beaufschlagen.

2. Einrichtung nach Anspruch 1, **dadurch gekennzeichnet, daß** die Stromversorgungsschaltung Speichermittel (7) zur Speicherung elektrischer Energie umfaßt, die vom Piezoelement (1, 17, 18) geliefert wird.

3. Einrichtung nach Anspruch 1 oder 2, **dadurch gekennzeichnet, daß** die Kalibriermittel (5) zur Einstellung mechanischer Energie das Piezoelement (1, 17, 18) mit einem definierten mechanischen Hub beaufschlagen.

4. Einrichtung nach Anspruch 3, **dadurch gekennzeichnet, daß** die Kalibriermittel (5) zur Einstellung mechanischer Energie mindestens eine Blattfeder (24) mit zwei stabilen Zuständen (25, 26) umfassen, die dazu dient, bei Überschreiten einer Kippstellung eine definierte Verschiebung eines Schlagstifts (22, 23) zu bewirken.

5. Einrichtung nach irgendeinem der Ansprüche 1 bis 4, **dadurch gekennzeichnet, daß** das Piezoelement (1) einen biegsamen Metallträger (17) sowie ein auf einer Seite des genannten Trägers angeordnetes Plättchen (18) aus einem piezoelektrischen Material umfaßt.

6. Einrichtung nach Anspruch 5, **dadurch gekennzeichnet, daß** die Steuermittel (5, 21, 23) das Piezoelement auf der dem Plättchen (18) abgewandten Seite beaufschlagen.

7. Einrichtung nach einem der Ansprüche 5 oder 6, **dadurch gekennzeichnet, daß** der biegsame Metallträger (17) frei beweglich in einer zu diesem Zweck vorgesehenen Aufnahme (20) gehalten wird.

8. Einrichtung nach einem der Ansprüche 5 oder 6, **dadurch gekennzeichnet, daß** der biegsame Metallträger durch eine Dichtung (27) gehalten wird, die auf einem Vorsprung angeordnet ist, welcher der mit dem Plättchen (18) versehenen Seite des genannten Trägers zugewandt ist.

9. Einrichtung nach irgendeinem der Ansprüche 5 bis 8, **dadurch gekennzeichnet, daß** das piezoelektrische Material des Plättchens (18) im wesentlichen aus Keramik oder einem Copolymer besteht.

10. Einrichtung nach irgendeinem der Ansprüche 1 bis 9, **dadurch gekennzeichnet, daß** das piezoelektrische Material eine mechanische Resonanz aufweist, um die Zeitdauer der Energielieferung an die Stromversorgungsschaltung (6, 7) zu verlängern.

11. Einrichtung nach irgendeinem der Ansprüche 2 bis 9, **dadurch gekennzeichnet, daß** die elektrischen Energiespeichermittel (7) mindestens einen elektrischen Kondensator umfassen, wobei die Kapazität der Speichermittel zwischen 0,4 und 50 Mikrofarad beträgt.

12. Einrichtung nach Anspruch 11, **dadurch gekennzeichnet, daß** die Kapazität der Speichennittel (7) zwischen 2 und 10 Mikrofarad beträgt.

13. Einrichtung nach irgendeinem der Ansprüche 1 bis 12, **dadurch gekennzeichnet, daß** sie mit der Stromversorgungsschaltung (6, 7) verbundene Energiesteuermittel (8) umfaßt, die dazu dienen, eine Initialisierungs- und Kodierphase (32) sowie eine Übertragungsphase (33) zu steuern.

14. Einrichtung nach irgendeinem der Ansprüche 1 bis 13, **dadurch gekennzeichnet, daß** die Übertragungsmittel Sendemittel (10) und Empfangsmittel umfassen.

15. Einrichtung nach irgendeinem der Ansprüche 1 bis 14, **dadurch gekennzeichnet, daß** die Übertragungsmittel Sendemittel (10, 36-44) umfassen, deren Stromversorgung über einen Ausgang (35) einer integrierten Schaltung (34) erfolgt.

16. Einrichtung nach irgendeinem der Ansprüche 1 bis 14, **dadurch gekennzeichnet, daß** sie mit den Übertragungsmitteln (8, 9, 10) verbundene Speichermittel (46) umfaßt.

17. Einrichtung nach irgendeinem der Ansprüche 1 bis 14, **dadurch gekennzeichnet, daß** sie mit den Übertragungsmitteln (8, 9, 10) verbundene Zählmittel (47) umfaßt.

18. Einrichtung nach irgendeinem der Ansprüche 1 bis 14, **dadurch gekennzeichnet, daß** die Übertragungsmittel Sendebedingungs-Steuermittel (45) umfassen.

19. Gerät mit einem mechanischen Betätigungsorgan (4, 52) **dadurch gekennzeichnet, daß** es eine Fembetätigungseinrichtung mit Eigenstromversorgung nach irgendeinem der Ansprüche 1 bis 18 umfaßt, wobei das genannte Betätigungsorgan dazu dient, die dem Energieerzeuger (1) zugeordneten Steuermittel (3) zu betätigen.

20. Gerät nach Anspruch 19, **dadurch gekennzeichnet, daß** das Gerät als elektrisches Schaltgerät (50) mit mechanischen Betätigungsmitteln (52) zur Betätigung der Steuermittel (3) in Abhängigkeit vom Schaltzustand des genannten Schaltgeräts ausgebildet ist.

21. Gerät nach Anspruch 19 oder 20, **dadurch gekennzeichnet, daß** die Übertragungsmittel (8, 9, 10) Signale aussenden, die zur Realisierung einer logischen Selektivität verwendet werden können.

22. Gerät nach irgendeinem der Ansprüche 19 bis 21, **dadurch gekennzeichnet, daß** die Übertragungsmittel (8, 9, 10) Signale aussenden, die zur Realisierung einer differenzierten Anzeige verwendet werden können.

23. Gerät nach irgendeinem der Ansprüche 19 bis 22, **dadurch gekennzeichnet, daß** die Übertragungsmittel (8, 9, 10) Signale aussenden, die eine Anzahl von Schaltspielen des genannten Gerätes abbilden.

24. Gerät nach Anspruch 19, **dadurch gekennzeichent, daß** es als elektrisches Steuergerät (55, 56, 57, 62) mit mechanischen Betätigungsmitteln ausgebildet, die durch einen Bediener betätigt werden können.

25. Gerät nach Anspruch 19, **dadurch gekennzeichnet, daß** es als elektrisches Steuergerät (61) mit mechanischen Betätigungsmitteln ausgebildet ist, die durch die Bewegung einer mechanischen Vorrichtung betätigt werden können.

26. Elektrische Anlage mit Hochfrequenz-Empfangsmitteln (12-15, 58-59, 63) **dadurch gekennzeichnet, daß** sie mindestens eine Fembetätigungseinrichtung mit Eigenstromversorgung nach irgendeinem der Ansprüche 1 bis 18 umfaßt, wobei der genannte Empfänger dazu dient, die von der genannten, mindestens einfach vorhandenen Einrichtung mit Eigenstromversorgung ausgesandten Signale zu empfangen.

27. Elektrische Anlage nach Anspruch 26, **dadurch gekennzeichnet, daß** sie mindestens einen Schaltschrank (54) umfaßt, der mindestens eine Fernbetätigungseinrichtung mit Eigenstromversorgung nach irgendeinem der Ansprüche 1 bis 18 sowie eine mit den Empfangsmitteln (58) verbundene Regelschaltung (60) umfaßt.

28. Elektrische Anlage nach einem der Ansprüche 26 oder 27, **dadurch gekennzeichnet, daß** sie mindestens ein Gerät (50, 55, 56, 57, 61, 62) nach irgendeinem der Ansprüche 19 bis 24 umfaßt.

## Claims

1. A self-powered remote control device comprising:
- transmission means (8, 9, 10),
- a power supply circuit (6, 7) connected to the transmission means,
- a generator comprising at least one piezoelectric element (1, 17, 18) receiving mechanical stresses produced by actions on the control means and supplying electric power to the power supply circuit, and
- control means (3) associated to the electric power generator,
device **characterized in that** the control means comprise means (5) for calibrating mechanical energy to strike the piezoelectric element (1, 17, 18) with a predetermined impact.

2. Device according to claim 1, **characterized in that** the power supply circuit comprises electric power storage means (7) to store electric power supplied by the piezoelectric element (1, 17, 18).

3. Device according to one of the claims I or 2, **characterized in that** the means (5) for calibrating mechanical energy strike the piezoelectric element (1, 17, 18) with a predetermined mechanical travel.

4. Device according to claim 3, **characterized in that** the means (5) for calibrating mechanical energy comprise at least one spring leaf (24) having two stable states (25, 26) to command a calibrated movement of a striker (22, 23) when a changeover position is passed.

5. Device according to any one of the claims 1 to 4, **characterized in that** the piezoelectric element (1) comprises a flexible metal support (17) and a pad (18) made of piezoelectric material arranged on one face of said support.

6. Device according to claim 5, **characterized in that** the control means (5, 22, 23) strike the piezoelectric element on the side opposite from the pad (18).

7. Device according to one of the claims 5 or 6, **characterized in that** the flexible metal support (17) is held freely in a housing (20) designed to receive it.

8. Device according to one of the claims 5 or 6, **characterized in that** the flexible metal support is secured by means of a seal (27) arranged on a rim directed towards the face of said support comprising the pad (18).

9. Device according to any one of the claims 5 to 8, **characterized in that** the piezoelectric material of the pad (18) is essentially composed of ceramic or copolymer.

10. Device according to any one of the claims 1 to 9, **characterized in that** the piezoelectric element has a mechanical resonance to increase the duration of supply of electric power to the power supply circuit (6, 7).

11. Device according to any one of the claims 2 to 9, **characterized in that** the means (7) for storing electric power comprise at least one electric capacitor, the capacity of the storage means being between 0.4 and 50 microfarads.

12. Device according to claim 11, **characterized in that** the capacity of the storage means (7) has a value between 2 and 10 microfarads.

13. Device according to any one of the claims 1 to 12, **characterized in that** it comprises electric power management means (8) connected to the power supply circuit (6, 7) to control an initialization and encoding phase (32) and a transmission phase (33).

14. Device according to any one of the claims 1 to 13, **characterized in that** the transmission means comprise transmitter means (10) and receiver means.

15. Device according to any one of the claims 1 to 14, **characterized in that** the transmission means comprise transmitting means (10, 36-44) supplied by an output port (35) of an integrated circuit (34).

16. Device according to any one of the claims 1 to 14, **characterized in that** it comprises storage means (46) connected to the transmission means (8, 9, 10).

17. Device according to any one of the claims 1 to 14, **characterized in that** it comprises counting means (47) connected to the transmission means (8, 9, 10).

18. Device according to any one of the claims 1 to 14, **characterized in that** the transmission means comprise transmission condition checking means (45).

19. Apparatus comprising a mechanical actuating means (4, 52) **characterized in that** it comprises a self-powered remote control device according to any one of the claims 1 to 18, said means being able to actuate the control means (3) associated to the power generator (1).

20. Apparatus according to claim 19, **characterized in that** the apparatus is an electrical switchgear apparatus (50) comprising mechanical actuating means (52) to actuate the control means (3) according to the state of said switchgear apparatus.

21. Apparatus according to one of the claims 19 or 20, **characterized in that** the transmission means (8, 9, 10) emit signals able to be used to perform logic selectivity.

22. Apparatus according to any one of the claims 19 to 21, **characterized in that** the transmission means (8, 9, 10) emit signals able to be used to perform differentiated annunciation.

23. Apparatus according to any one of the claims 19 to 22, **characterized in that** the transmission means (8, 9, 10) emit signals representative of a number of operations of said apparatus.

24. Apparatus according to claim 19, **characterized in that** the apparatus is an electrical control apparatus (55, 56, 57, 62) comprising mechanical actuating means able to be actuated by an operator.

25. Apparatus according to claim 19, **characterized in that** the apparatus is an electrical control apparatus (61) comprising mechanical actuating means able to be actuated by movement of a mechanical device.

26. Electrical installation comprising high-frequency receiver means (12-15, 58-59, 63) **characterized in that** it comprises at least one self-powered remote control device according to any one of the claims 1 to 18, said receiver means being designed to receive signals transmitted by said at least one self-powered device.

27. Electrical installation according to claim 26, **characterized in that** it comprises at least one electrical cabinet (54) containing at least one self-powered remote control device according to any one of the claims 1 to 18 and an automatic control circuit (60) connected to the receiver means (58).

28. Electrical installation according to one of the claims 26 or 27 **characterized in that** it comprises at least one apparatus (50, 55, 56, 57, 61, 62) according to any one of the claims 19 to 24.
